# EUROPÄISCHE PATENTSCHRIFT

(11) **EP 0 879 865 B1**
(45) Veröffentlichungstag und Bekanntmachung des Hinweises auf die Patenterteilung: **07.07.2004**
(21) Anmeldenummer: 98108485.8
(22) Anmeldetag: 09.05.1998
(51) Int. Cl.: C09J 195/00, C08L 95/00

(54) **Bitumen-Haftkleber**
Bitumen pressure sensitive adhesive
Composition bitumineuse auto-adhésive

(30) Priorität: 23.05.1997 DE 19721558
(43) Veröffentlichungstag der Anmeldung: 25.11.1998
(73) Patentinhaber: Goldschmidt AG, 45127 Essen (DE)
(72) Erfinder: Ballandies, Jürgen, 45327 Essen (DE); Müller, Felix, Dr., 42555 Velbert (DE)

(56) Entgegenhaltungen:
- DD-A- 154 297
- US-A- 2 537 190
- US-A- 3 859 227
- US-A- 4 464 285

## Beschreibung

Gegenstand der Erfindung ist ein saurer Bitumen-Haftkleber, der frei von organischen Lösungsmitteln ist.

Bitumen sind die bei der schonenden Aufarbeitung von Erdölen gewonnenen dunkelfarbigen, bis springharten, schmelzbaren, hochmolekularen Kohlenwasserstoffgemische und die in Schwefelkohlenstoff löslichen Anteile der Naturasphaltene.

Von den drei Verfahren, Bitumen zu verflüssigen und damit erst verarbeitbar zu machen, ist die Emulgierung in Wasser von besonderer Bedeutung. Bitumenemulsionen sind eine spezifische Anwendungsform dieses Bindemittels Bitumen, das durch die Emulgierung in Wasser in einen kaltflüssigen, labilen Zustand versetzt wird. In diesem Zustand werden Bitumenemulsionen überwiegend, abhängig von ihren Eigenschaften und Adhäsionsbedingungen, im bitumenhaltigen Straßenbau meist kalt oder warm verarbeitet. Die Adhäsionsbedingungen sind überwiegend durch äußere Einflüsse gekennzeichnet.

Es sind zwei verschiedene Vorgänge zu unterscheiden, bei denen Adhäsionsprobleme auftreten können:
1. Die Haftung des Bindemittels am Mineralkorn und
2. die Haftung der gesamten Asphaltschicht zum Untergrund oder auch der Verbund zwischen einzelnen Schichten.

Außerdem muß differenziert werden zwischen aktiver und passiver Haftung:
Unter aktiver Haftung soll die Verdrängung von Wasser und Feuchtigkeit von der Kontaktoberfläche verstanden werden. Passive Haftung liegt vor, wenn saubere, trockene Oberflächen mit Bindemittel umhüllt werden; dabei darf kein Verlust an Haftung entstehen. Ein kraftschlüssiger Verbund zwischen den einzelnen Schichten einer Asphaltstraßenbefestigung ist eine unabdingbare Voraussetzung, um die volle Tragfähigkeit einer Befestigung zu erlangen. Der Verbund dünner Schichten ist ein wichtiges technisches und ausführungsmäßiges Detail im Asphaltstraßenbau. Eine einwandfreie Ausführung wird schwieriger, sofern statt der Verbindung neuer Lagen miteinander eine alte Asphaltunterlage vorhanden ist, die zudem noch verschmutzt sein kann; wenn also nicht nur Wasserschichten, sondern auch Staub durchdrungen werden muß. Verschmutzte Untergründe sind dabei das größte Problem der Haftung. Natürlich sollte vorhandener Staub normalerweise entfernt werden. Aber es gibt Arten von Staub und tonigen Schichten, die so fest am Untergrund haften, daß sie sich nur unter hohem technischen Aufwand beseitigen lassen. Andere tonige Verschmutzungen können so dünn sein, daß sie nicht erkennbar sind. Auch werden die Einbauvorschriften insoweit vor Ort nicht immer genau eingehalten.

Dank einer ausgereiften Emulsionstechnologie ist es trotzdem möglich, Schmutz und Staub durch besondere Additive auf Bitumenbasis zu durchdringen. Hierfür gibt es zwei Typen:
a) Bitumenlösungen,
b) in Wasser emulgierte Spezial-Bitumen als sogenannte Haftkleber, die bestimmten technischen Lieferbedingungen entsprechen.

Bitumenlösungen sind normalerweise preiswerter als Haftkleber, besitzen jedoch zwei entscheidende Nachteile:
- Einen sehr hohen Gehalt an in der Regel organischen Lösemitteln (ca. 70 %, somit deutlich höher als beim Regeneriermittel);
   das bedeutet: bei einem üblichen Bitumengehalt von 30 bis 40 Gew.-% werden 6 bis 7 t Lösemitteldampf in die Atmosphäre abgegeben, wenn 10 t der Lösung verspritzt werden.
- Dünne Schichten im Kalteinbau können nur aufgebracht werden, wenn die Lösemittel vollständig verdampft sind. Sie dürfen nicht mit eingeschlossen werden.

Haftkleber umfassen üblicherweise Bitumenemulsionen, die meist etwa 5 bis 10 Gew.-% Lösemittel enthalten und staubige Schichten durchdringen können. Sie gelangen damit auch in Poren und Haarrisse. Weil üblicherweise eine kationische Emulsion vorliegt, muß sie nicht unbedingt gänzlich trocknen, bevor eine dünne Schicht im Kalteinbau aufgebracht wird. Ein nicht völlig durchgetrockneter Haftkleber führt zu besseren Ergebnissen, bezüglich der Haftung, als ein gänzlich getrockneter. Haftkleber entsprechen der folgenden Spezifikation - (Bitumenemulsionen in Straßenerhalt und Straßenbau - vom Fachverband der Kaltasphaltindustrie 1994)
Emulsionstyp: kationisch
Bitumengehalt: ca. 35 Gew.-%
Art des Bitumens: B80-B200, gegebenenfalls polymermodifiziert,
Lösemittelgehalt: bis zu 5 Gew.-%
Viskosität: DIN 52023 Tl, 20 °C/4 mm, 6 s
Benetzungsfähigkeit: DIN 52046, 20 min

In der DE 39 23 693 A1 wird eine Bitumenemulsion für umweltfreundliches Recycling von pechhaltigem Ausbauasphalt beschrieben. Insbesondere betrifft diese Offenlegungsschrift eine Bitumenemulsion für umweltfreundliches Recycling von pechhaltigem Ausbauasphalt, die dadurch gekennzeichnet ist, daß dieser Bitumenemulsion kationische Emulgatoren und Natur- oder Synthesekautschuk oder Kunstharzdispersionen zugesetzt werden.

In der EP 0 387 909 B1 werden lösemittelfreie Mischungen beschrieben, die eine wasserfreie, durch Feuchtigkeit aushärtbare Asphaltdispersion mit einem Erweichungspunkt unterhalb von 176,67°C (350 °F) in einem Polyurethan-Prepolymer umfassen, der Asphalt im wesentlichen keine funktionellen, mit einer funktionellen Gruppe des Prepolymers reagierenden Gruppe enthält, die Dispersion durch Verträglichmacher aufrechterhalten wird, der Verträglichmacher in einer Menge im Bereich von 0,01 bis 5 Teilen auf 100 Teile der Mischung vorhanden ist, wobei der Verträglichmacher entweder aus einer Reihe von kurzkettigen Fettsäuren mit 6 bis 18 C-Atomen, deren Metallsalzen oder aus einer Gruppe ausgewählt ist, die aus Propylenglykolmonostearat, Bisstearylesterpolypropylendiol, Ethylenglykolmonostearat, Triethylenglykolcaprinatcaprylat und Triethylenglykol-Dipelargonat besteht.

Das Polyurethan-Prepolymer fungiert praktisch wie ein Lösemittel, verbleibt jedoch nach der Vernetzung innerhalb der Asphaltschicht. Das Polyurethan-Prepolymer wird in einer Menge von 25 bis 75 Gew.-%, bezogen auf die Gesamtzusammensetzung, eingesetzt.

Gegenstand der DD 0 154 297 A (D1) sind unstabile (gemäß DIN 1995 T.3) neutrale kationaktive Bitumenemulsionen auf der Basis von Fettaminen in Kombination mit einer Mischung aus hydrophilen und lipophilen nichtionogenen Tensiden.

Die nichtionischen Tenside dienen als Ersatz für den ansonsten verwendeten Überschuss an Säuren und sollen die Lagerstabilität der Emulsion verbessern ohne die Haftung und Klebefähigkeit gegenüber saurem Gestein zu beeinträchtigen.

Nach DIN 1995 versteht man unter einem Bitumen-Haftkleber eine Lösemittel-haltige Bitumenemulsion, die zum Verkleben von Asphaltschichten dient. Üblich ist der Einsatz von 3 bis 7 Gew.-% Lösemittel. Die Ladungsart kann prinzipiell anionisch, kationisch oder nichtionisch sein. Die äußere Beschaffenheit soll die Merkmale braun, flüssig und homogen umfassen. In den deutschen Normen ist festgehalten, daß der Wassergehalt höchstens 60 % und Siebrückstand höchstens 0,5 % betragen darf.

Anstelle der Viskosität wird bei Bitumen-Haftklebern üblicherweise die Ausflußzeit mit dem Straßenpech-Ausflußgerät nach DIN 52023 Teil 1 gemessen. Unter Verwendung einer 4-mm-Düse bei 20 °C darf die Ausflußzeit maximal 6 s betragen.

Der Gewichtsverlust darf entsprechend den deutschen Normen höchstens 70 % betragen. Der Erweichungspunkt, bestimmt durch die Ring- und Kugelpenetration, des Verdunstungsrückstandes sollte nach DIN 52045 Teil 2 und DIN 52011 mindestens 37 °C betragen.

Auch die Wassereinwirkung auf den Bindemittelüberzug sowie die Benetzungsfähigkeit, gemessen nach DIN 5206 und DIN 52046, stellen wesentliche Anforderungen an Bitumen-Haftkleber dar.

So ist die Aufgabe der vorliegenden Erfindung darin zu sehen, einen Bitumen-Haftkleber zur Verfugung zu stellen, der sämtliche der vorgenannten Anforderungen an Bitumen-Haftkleber erfüllt, der jedoch vollständig ohne den Einsatz von organischen Lösungsmitteln auskommt.

Hierbei wird besonderer Wert auf die Ausflußzeit mit dem Straßenpech-Ausflußgerät und die Benetzungsfähigkeit gelegt, da mit diesen Kriterien die Güte der Verarbeitbarkeit auch unter ungünstigen Bedingungen, beispielsweise bei feuchten oder leicht säurehaltigen Materialien auch bei niedrigen Temperaturen gewährleistet ist.

Die Lösung der vorgenannten Aufgabe besteht in einer ersten Ausführungsform der Erfindung in einem sauren Bitumen-Haftkleber, der frei von organischen Lösungsmitteln

| | |
|---|---|
| 45 bis 60 | Gew.-% Wasser, |
| 30 bis 45 | Gew.-% Bitumen, |
| 1 bis 10 | Gew.-% nichtionische Emulgatoren, |
| 0,2 bis 2 | Gew.-% kationische und/oder amphotere Emulgatoren, |
| 0,005 bis 1 | Gew.-% Mineralsäure und |
| 0 bis 0,1 | Gew.-% Entschäumer |

enthält.

Wenn im Sinne der vorliegenden Erfindung Bitumen-Haftkleber als lösemittelfreie Bitumenemulsionen beschrieben werden, so ist darunter zu verstehen, daß auf die Anwesenheit von organischen, leicht verdunstenden Lösungsmitteln, im englischen Sprachgebrauch häufig als "volatile organic components" bezeichnet, vollständig verzichtet wird. Dennoch weisen die erfindungsgemäßen Bitumen-Haftkleber außerordentlich niedrige Viskositäten auf, die den Normen-Anforderungen an entsprechende Bitumen-Haftklebern genügen.

Beim Auftragen des erfindungsgemäßen Bitumen-Haftklebers auf ältere Asphaltschichten wird, bedingt durch die geringe Viskosität, eine rauhe Oberfläche erhalten, so daß die auf den Haftkleber aufgebrachte Asphaltschicht nicht auf einer ebenen Haftkleberschicht aufschwimmen kann. Mit Hilfe der vorliegenden Erfindung ist es somit möglich, bei Raumtemperatur versprühbare lösemittelfreie Bitumen-Haftkleber zur Verfügung zu stellen. Die Haftung des Bindemittels am Mineralkorn und die Haftung der gesamten Asphaltschicht zum Untergrund sowie der Verbund zwischen einzelnen Schichten ist dennoch sehr gut.

In Anlehnung an die in Deutschland verbindlichen Normen zur Herstellung von Bitumen-Haftklebern wird der Wassergehalt der Emulsion vorzugsweise im Bereich von 55 bis 60 Gew.-% eingestellt. In gleicher Weise ist es ebenfalls bevorzugt, wenn die Bitumen-Haftkleber 35 bis 40 Gew.-% Bitumen enthalten.

Erfindungsgemäß wurde gefunden, daß die Art und Auswahl der Bitumen nur von untergeordneter Bedeutung ist. So sind mit Hilfe der vorliegenden Erfindung harte, weiche, emulgierfähige und/oder polymermodifizierte Bitumen in den erfindungsgemäßen Bitumen-Haftklebern einsetzbar. Beispielsweise können Bitumen mit der Sorten-Bezeichnung B80 mit einer Nadelpenetration bei 25 °C von 70 bis 100 pro 1/10 mm und einem Erweichungspunkt, bestimmt durch den Ring- und Kugelversuch, von 44 bis 49°C ebenso eingesetzt werden, wie weichere, gegebenenfalls emulgierfähige Bitumen gemäß der Sorten-Bezeichnung B200E, entsprechend einer Nadelpenetration bei 25 °C von 160 bis 210 pro 1/10 mm und einem Erweichungspunkt nach Ring und Kugel von 37 bis 44 °C. In gleicher Weise lassen sich auch polymermodifizierte Bitumen der Sorte B200 einsetzen, die Viskositätswerte bei der Nadelpenetration von 25 °C im Bereich von 160 bis 220 pro 1/10 mm und Erweichungspunkte, nach Ring und Kugel bestimmt, von 36 bis 42 °C aufweisen. Der besondere Vorteil der vorliegenden Erfindung ist darin zu sehen, daß harte Bitumen mit einer geringen Leitzahl, beispielsweise B80, auch im Kalteinbau eingesetzt werden können. Bitumen der Sorten B300 weisen eine zu geringe Härte auf, so daß diese im Straßenbau meist nicht eingesetzt werden.

Die überraschend gute Emulgierung der obengenannten Bitumen ist möglich unter Verwendung von 1 bis 10 Gew.-%, insbesondere unter Verwendung von 3 bis 8 Gew.-% nichtionischen Emulgatoren. Nichtionische Emulgatoren werden häufig durch HLB-Werte gekennzeichnet, wobei der HLB-Wert für die Hydrophilie-Lipophilie-Balance steht. In Kirk-Othmer "Encyclopedia of Chemical Technology", 3. Auflage, Band 8, S. 913 und 916, John Wiley and Sons, New York, N.Y. werden in Tabelle 4 und 5 HLB-Werte und ausgewählte Markenbezeichnungen für oberflächenaktive Verbindungen genannt.

Besonders bevorzugt im Sinne der vorliegenden Erfindung werden als nichtionische Emulgatoren alkoxylierte Glycerololeoricinolate mit mittlerer Hydrophilie eingesetzt. Besonders bevorzugt im Sinne der vorliegenden Erfindung sind die einzusetzenden Emulgatoren in Pflanzen- und synthetischen Esterölen bei Raumtemperatur klar löslich, so daß sich diese besonders zur Herstellung von selbst emulgierend eingestellten Ölen eignen.

Besonders bevorzugte nichtionische Emulgatoren, die bei Zugabe von Wasser spontan in feinteilige, stabile O/W-Emulsionen übergehen, sind von besonders großem Interesse, da in vielen Bereichen aus Umweltaspekten versucht wird, Mineralöle durch Pflanzen- und synthetische Esteröle zu ersetzen. Besonders bevorzugt im Sinne der vorliegenden Erfindung enthält daher das alkoxylierte Glycerololeoricinolat 10 bis 30 Mol Ethylenoxid pro Mol Glycerololeoricinolat.

Neben den nichtionischen Emulgatoren enthalten die erfindungsgemäßen Bitumen-Haftkleber auch kationische und/oder amphotere Emulgatoren, insbesondere in einer Menge von 0,5 bis 8 Gew.-%. Besonders bevorzugt im Sinne der vorliegenden Erfindung werden im Handel erhältliche amphotere Emulgatoren für Bitumen eingesetzt. Beispielhaft im Sinne der vorliegenden Erfindung wird daher als amphoterer Emulgator besonders bevorzugt Kokosfettsäurebetain eingesetzt.

Zur Einstellung eines sauren pH-Wertes enthalten die erfindungsgemäßen Bitumen-Haftkleber geringe Anteile an Mineralsäuren, insbesondere 0,005 bis 0,3 Gew.-%, wobei die Verwendung von Salzsäure, meist in verdünnter wäßriger Lösung, beispielsweise 36,5 %ig, besonders bevorzugt ist.

Neben den obengenannten Bestandteilen können die erfindungsgemäßen Bitumen-Haftkleber gegebenenfalls Entschäumungsmittel enthalten. Diese stehen dem Fachmann in einer breiten Palette zur Verfügung, wobei besonders bevorzugt im Sinne der vorliegenden Erfindung Polysiloxane im weitesten Sinne eingesetzt werden können. Besonders bevorzugt im Sinne der vorliegenden Erfindung enthalten die Bitumen-Haftkleber 0,001 bis 0,01 Gew.-% Entschäumer.

Die erfindungsgemäßen Bitumen-Haftkleber weisen eine hellbraune bis braune Farbe auf, was für eine sehr geringe Teilchengröße spricht. Übliche, im Handel erhältliche Bitumen-Emulsionen haben eine Teilchengröße von 10 µm und weisen in der Regel eine deutliche dunklere Färbung auf. Die erfindungsgemäßen Bitumen-Haftkleber sind in der Regel sehr lagerstabil und dringen beim Auftragen auf rissige Oberflächen tief in die darunterliegenden Schichten ein, so daß äußerst dünne Schichten möglich sind.

### Ausführungsbeispiele:

### Beispiel 1:

Unter Verwendung von 35 Gew.-% eines Bitumens der Sorte B80 mit einer Nadelpenetration von 25 °C von 70 bis 100 pro 1/10 mm, einem Erweichungspunkt, bestimmt nach Ring und Kugel, von 44 bis 49 °C, einer Menge von 0,08 Gew.-%, 36,5 %ige HCl, 58,61 Gew.-% Wasser, 1,3 Gew.-% eines amphoteren Emulgators (Kokosfettsäurebetain) (PROMAK® EK 7A), 5 Gew.-% eines nichtionischen Tensides (Polyethylenglycerololeoricinolat TEGOTENS®V20) und 0,01 Gew.-% Entschäumer (TEGO®Antifoam 1488) wurde ein Bitumen-Haftkleber hergestellt, der einen pH-Wert von 2,26 aufwies.

### Beispiel 2:

Unter Verwendung von 35 Gew.-% eines Bitumens der Sorte B80E mit einer Nadelpenetration von 25 °C von > 100 pro 1/10 mm, einem Erweichungspunkt, bestimmt nach Ring und Kugel, von > 40 °C, einer Menge von 0,08 Gew.-%, 36,5 %ige HCl, 58,62 Gew.-% Wasser, 1,3 Gew.-% eines amphoteren Emulgators (Kokosfettsäurebetain)(PROMAK® EK 7A),5 Gew.-% eines nichtionischen Tensides (Polyethylenglycerololeoricinolat TEGOTENS®V20) wurde ein Bitumen-Haftkleber hergestellt, der einen pH-Wert von 2,15 aufwies.

### Beispiel 3:

Unter Verwendung von 35 Gew.-% eines Bitumens der Sorte B200E mit einer Nadelpenetration von 25 °C von 160 bis 210 pro 1/10 mm, einem Erweichungspunkt, bestimmt nach Ring und Kugel, von 37 bis 44 °C, einer Menge von 0,08 Gew.-%, 36,5 %ige HCl, 58,91 Gew.-% Wasser, 1,0 Gew.-% eines amphoteren Emulgators (Kokosfettsäurebetain) (PROMAK® EK 7A), 5 Gew.-% eines nichtionischen Tensides (Polyethylenglycerololeoricinolat TEGOTENS®V20) und 0,01 Gew.-% Entschäumer (TEGO®Antifoam 1488) wurde ein Bitumen-Haftkleber hergestellt, der einen pH-Wert von 1,97 aufwies.

### Beispiel 4:

Unter Verwendung von 35 Gew.-% eines Bitumens der Sorte B200E mit einer Nadelpenetration von 25 °C von 160 bis 210 pro 1/10 mm, einem Erweichungspunkt, bestimmt nach Ring und Kugel, von 37 bis 44 °C, einer Menge von 0,08 Gew.-%, 36,5 %ige HCl, 59,45 Gew.-% Wasser, 0,80 Gew.-% eines amphoteren Emulgators (Kokosfettsäurebetain) (PROMAK® EK 7A), 4,5 Gew.-% eines nichtionischen Tensides (Polyethylenglycerololeoricinolat TEGOTENS®V20) und 0,01 Gew.-% Entschäumer (TEGO®Antifoam 1488) wurde ein Bitumen-Haftkleber hergestellt, der einen pH-Wert von 1,66 aufwies.

### Beispiel 5:

Unter Verwendung von 37 Gew.-% eines Bitumens der Sorte B200E mit einer Nadelpenetration von 25 °C von 160 bis 210 pro 1/10 mm, einem Erweichungspunkt, bestimmt nach Ring und Kugel, von 37 bis 44 °C, einer Menge von 0,08 Gew.-%, 36,5 %ige HCl, 56,92 Gew.-% Wasser, 1,0 Gew.-% eines amphoteren Emulgators (Kokosfettsäurebetain) (PROMAK® EK 7A), 5 Gew.-% eines nichtionischen Tensides (Polyethylenglycerololeoricinolat TEGOTENS®V20) und 0,01 Gew.-% Entschäumer (TEGO®Antifoam 1488) wurde ein Bitumen-Haftkleber hergestellt, der einen pH-Wert von 1,92 aufwies.

### Beispiel 6:

Unter Verwendung von 35 Gew.-% eines Bitunens der Sorte pmB200E mit einer Nadelpenetration von 25 °C von 160 bis 220 pro 1/10 mm, einem Erweichungspunkt, bestimmt nach Ring und Kugel, von 36 bis 42 °C, einer Menge von 0,08 Gew.-%, 36,5 %ige HCl, 58,91 Gew.-% Wasser, 1,0 Gew.-% eines amphoteren Emulgators (Kokosfettsäurebetain) (PROMAK® EK 7A), 5 Gew.-% eines nichtionischen Tensides (Polyethylenglycerololeoricinolat TEGOTENS®V20) und 0,01 Gew.-% Entschäumer (TEGO®Antifoam 1488) wurde ein Bitumen-Haftkleber hergestellt, der einen pH-Wert von 1,94 aufwies.

### Vergleichsbeispiel 1:

Als Vergleichsbeispiel 1 diente ein handelsüblicher Bitumen-Haftkleber, der 35 Gew.-% eines Bitumens der Sorte B80 mit einer Nadelpenetration bei 25 °C von 70 bis 100 pro 1/10 mm und einen Erweichungspunkt, bestimmt nach Ring und Kugel, von 44 bis 49 °C aufwies. Die Menge an Wasser wurde zu 60 % bestimmt und ein pH-Wert von 2,0 gemessen. Die Art und genaue Menge des eingesetzten Lösemittels konnte nicht bestimmt werden.

### Vergleichsbeispiel 2:

Als Vergleichsbeispiel 2 diente ein handelsüblicher Bitumen-Haftkleber, der 35 Gew.-% eines Bitumens der Sorte B80 mit einer Nadelpenetration bei 25 °C von 70 bis 100 pro 1/10 mm und einen Erweichungspunkt, bestimmt nach Ring und Kugel, von 44 bis 49 °C aufwies. Die Menge an Wasser wurde zu 58 % bestimmt und ein pH-Wert von 4,8 gemessen. Die Art und genaue Menge des eingesetzten Lösemittels konnte nicht bestimmt werden.

### Vergleichsbeispiel 3:

Als Vergleichsbeispiel 3 diente ein handelsüblicher Bitumen-Haftkleber, der 35 Gew.-% eines Bitumens der Sorte B80 mit einer Nadelpenetration bei 25 °C von 70 bis 100 pro 1/10 mm und einen Erweichungspunkt, bestimmt nach Ring und Kugel, von 44 bis 49 °C aufwies. Die Menge an Wasser wurde zu 60 % bestimmt und der pH-Wert von 1,94 gemessen. Die Art und genaue Menge des eingesetzten Lösemittels konnte nicht bestimmt werden.

Alle Emulsionen sind der Sorte Bitumen-Haftkleber zuzuordnen. Die Ladungsart wurde in allen Emulsionen nach DIN 52044 als kationische bestimmt. Die äußere Beschaffenheit der Emulsionen nach DIN 52002 war in allen Fällen homogen und flüssig. Während die Emulsionen der erfindungsgemäßen Beispiele 1 bis 6 hellbraune bis braune Beschaffenheit aufwiesen, waren die Emulsionen der Vergleichsbeispiele 1 bis 3 braun/schwarz.

In der Tabelle sind die Arten für die Ausflußzeit im Straßenpech-Viskosimeter wie oben definiert sowie die Benetzungsfähigkeit nach DIN 52046 bei 20 °C sowie die Benetzungsfähigkeit bei 50 °C wiedergegeben.

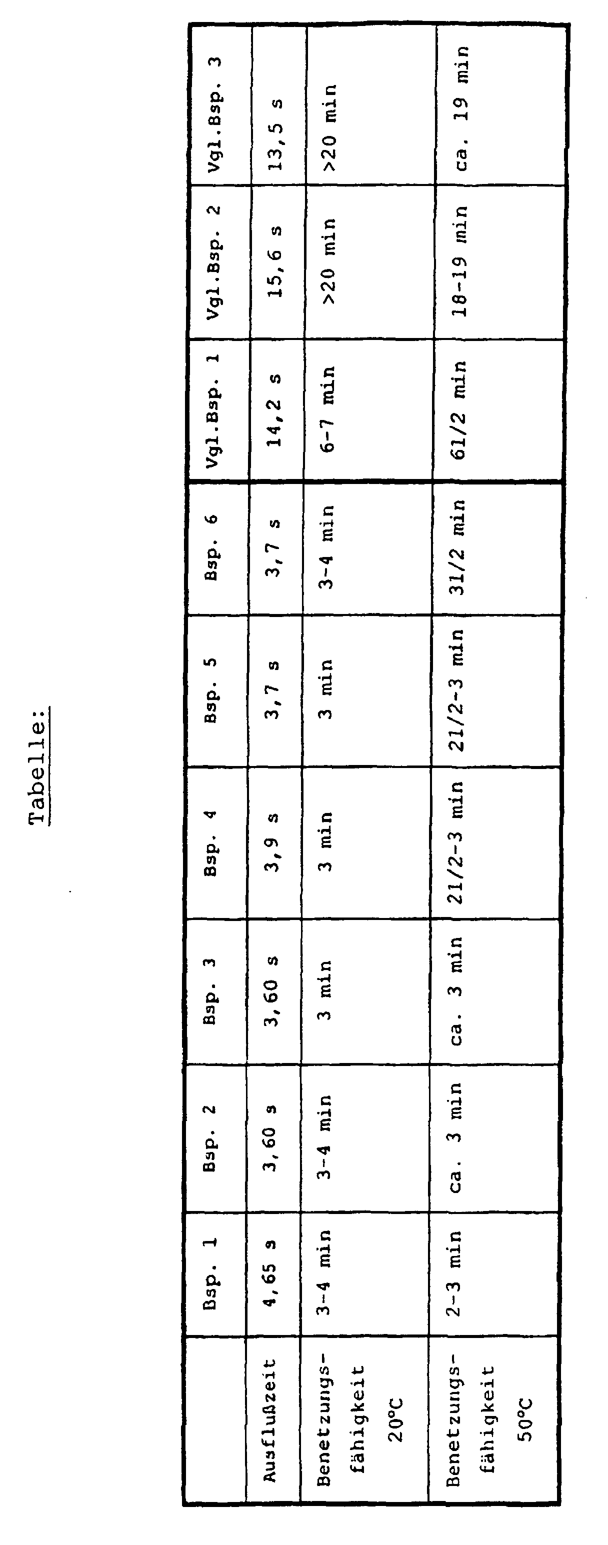

Der Tabelle ist zu entnehmen, daß die erfindungsgemäßen Ausführungsbeispiele 1 bis 6 deutliche Vorteile gegenüber Bitumen-Haftklebern des Standes der Technik aufweisen.

## Patentansprüche

1. Saure Bitumen-Haftkleber, frei von organischen Lösungsmitteln, enthaltend
| | |
|---|---|
| 45 bis 60 | Gew.-% Wasser, |
| 30 bis 45 | Gew.-% Bitumen, |
| 1 bis 10 | Gew.-% nichtionische Emulgatoren, |
| 0,2 bis 2 | Gew.-% kationische und/oder amphotere Emulgatoren, |
| 0,005 bis 1 | Gew.-% Mineralsäure und |
| 0 bis 0,1 | Gew.-% Entschäumer. |

2. Haftkleber nach Anspruch 1, enthaltend 55 bis 60 Gew.-% Wasser.

3. Haftkleber nach Anspruch 1, enthaltend 35 bis 40 Gew.-% Bitumen.

4. Haftkleber nach Anspruch 1, enthaltend harte, weiche, emulgierfähige und/oder polymermodifizierte Bitumen.

5. Haftkleber nach Anspruch 1, enthaltend 3 bis 8 Gew.-% nichtionische Emulgatoren.

6. Haftkleber nach Anspruch 1, wobei die nichtionischen Emulgatoren HLB-Werte im Bereich von 5 bis 15, insbesondere 7 bis 10 aufweisen.

7. Haftkleber nach Anspruch 1, wobei die nichtionischen Emulgatoren ausgewählt sind aus alkoxylierten Glycerololeoricinolaten.

8. Haftkleber nach Anspruch 7, **dadurch gekennzeichnet, daß** das alkoxylierte Glycerololeoricinolat 10 bis 30 Mol Ethylenoxid pro Mol Glycerololeoricinolat enthält.

9. Haftkleber nach Anspruch 1, enthaltend 0,5 bis 8 Gew.-% kationische und/oder amphotere Emulgatoren.

10. Haftkleber nach Anspruch 1, **dadurch gekennzeichnet, daß** die amphoteren Emulgatoren ausgewählt sind aus Kokosfettsäurebetain.

11. Haftkleber nach Anspruch 1, enthaltend 0,001 bis 0,1 Gew.-% Entschäumer.

## Claims

1. Acidic bituminous pressure-sensitive adhesives, free from organic solvents, containing
| | |
|---|---|
| 45 to 60% | by weight water |
| 30 to 45% | by weight bitumens, |
| 1 to 10% | by weight nonionic emulsifiers, |
| 0.2 to 2% | by weight cationic and/or amphoteric emulsifiers, |
| 0.005 to 1% | by weight mineral acid and |
| 0 to 0.1% | by weight defoamers. |

2. Pressure-sensitive adhesives according to Claim 1, containing 55 to 60% by weight water.

3. Pressure-sensitive adhesives according to Claim 1, containing 35 to 40% by weight bitumens.

4. Pressure-sensitive adhesives according to Claim 1, comprising hard, soft, emulsifiable and/or polymer-modified bitumens.

5. Pressure-sensitive adhesives according to Claim 1, containing 3 to 8% by weight nonionic emulsifiers.

6. Pressure-sensitive adhesives according to Claim 1, the nonionic emulsifiers having HLB values in the range from 5 to 15, in particular 7 to 10.

7. Pressure-sensitive adhesives according to Claim 1, the nonionic emulsifiers being selected from alkoxylated glycerol oleoricinolates.

8. Pressure-sensitive adhesives according to Claim 7, **characterized in that** the alkoxylated glycerol oleoricinolate contains 10 to 30 mol of ethylene oxide per mole of glycerol oleoricinolate.

9. Pressure-sensitive adhesives according to Claim 1, containing 0.5 to 8% by weight cationic and/or amphoteric emulsifiers.

10. Pressure-sensitive adhesives according to Claim 1, **characterized in that** the amphoteric emulsifiers are selected from coconut fatty acid betaine.

11. Pressure-sensitive adhesives according to Claim 1, containing 0.001 to 0.1% by weight defoamers.

## Revendications

1. Auto-adhésif bitumineux acide, exempt de solvants organiques, contenant
| | |
|---|---|
| 45 à 60% en poids | d'eau, |
| 30 à 45% en poids | de bitume, |
| 1 à 10% en poids | d'émulsifiants non ioniques, |
| 0,2 à 2% en poids | d'émulsifiants cationiques et/ou amphotères, |
| 0,005 à 1% en poids | d'acide minéral et |
| 0 à 0,1% en poids | d'antimousse. |

2. Auto-adhésif selon la revendication 1, contenant 55 à 60% en poids d'eau.

3. Auto-adhésif selon la revendication 1, contenant 35 à 40% en poids de bitume.

4. Auto-adhésif selon la revendication 1, contenant des bitumes durs, mous, émulsifiables et/ou modifiés par un polymère.

5. Auto-adhésif selon la revendication 1, contenant 3 à 8% en poids d'émulsifiants non ioniques.

6. Auto-adhésif selon la revendication 1, les émulsifiants non ioniques présentant des valeurs de BHL dans la plage de 5 à 15, en particulier de 7 à 10.

7. Auto-adhésif selon la revendication 1, les émulsifiants non ioniques étant choisis parmi les oléoricinolates de glycérol alcoxylés.

8. Auto-adhésif selon la revendication 7, **caractérisé en ce que** l'oléoricinolate de glycérol alcoxylé contient 10 à 30 moles d'oxyde d'éthylène par mole d'oléoricinolate de glycérol.

9. Auto-adhésif selon la revendication 1, contenant 0,5 à 8% en poids d'émulsifiants cationiques et/ou amphotères.

10. Auto-adhésif selon la revendication 1, **caractérisé en ce que** les émulsifiants amphotères sont choisis parmi les bétaïnes d'acide gras de coco.

11. Auto-adhésif selon la revendication 1, contenant 0,001 à 0,1% en poids d'antimousse.
